# EUROPEAN PATENT APPLICATION

(11) **EP 4 696 594 A1**
(43) Date of publication of application: **18.02.2026**
(21) Application number: 25192779.4
(22) Date of filing: 30.07.2025
(51) Int. Cl.: B62J 9/14, B62K 19/46, B62J 15/00, B62J 40/00

(54) **STRADDLED VEHICLE**

(30) Priority: 15.08.2024 CN 202411122463
(71) Applicant: Yamaha Hatsudoki Kabushiki Kaisha, Iwata-shi, Shizuoka 438-8501 (JP)
(72) Inventor: Shimada, Taku, Shanghai, 200241 (CN); Liang, Mo, Shanghai, 200241 (CN)
(74) Representative: Grünecker Patent- und Rechtsanwälte PartG mbB

(57) **Abstract**

The present straddled vehicle (1) includes a seat (5), a storage box (21), a rear wheel (8), and a rear fender (7). The storage box (21) is disposed below the seat (5). The rear fender (7) is disposed below the storage box (21). The rear fender (7) is movable up and down together with the rear wheel (8). The storage box (21) includes a bulge portion (26), bulging downward, in a bottom surface thereof. The rear fender (7) includes a fender top portion (31) and a fender front portion (32). The fender top portion (31) is located uppermost in the rear fender (7). The fender front portion (32) extends forward and downward in a curved shape from the fender top portion (31). The bulge portion (26) is disposed above the fender front portion (32).

## Description

The present invention relates to a straddled vehicle.

There is a type of straddled vehicle including a storage box. For example, JP 2011-213227 A describes a straddled vehicle in which a storage box is disposed below a seat. The storage box is capable of storing therein a helmet.

For example, it is desirable for the storage box to have therein a large storage space so as to store a large-sized helmet such as a full-face helmet. In this case, however, the increase in size of the storage box is inevitable. When increased in size, the storage box emerges a problem of interference with a device disposed below the storage box. It is an object of the present invention to provide a straddled vehicle that enable a storage box to store therein a large-sized helmet and to avoid the storage box from interfering with a device disposed below the storage box. According to the present invention said object is solved by a straddled vehicle having the features of independent claim 1. Preferred embodiments are laid down in the dependent claims.

Accordingly, a straddled vehicle includes a seat, a storage box, a rear wheel, and a rear fender. The storage box is disposed below the seat. The rear fender is disposed below the storage box. The rear fender is movable up and down together with the rear wheel. The storage box includes a bulge portion, bulging downward, in a bottom surface thereof. The rear fender includes a fender top portion and a fender front portion. The fender top portion is located uppermost in the rear fender. The fender front portion extends forward and downward in a curved shape from the fender top portion. The bulge portion is disposed above the fender front portion.

In the straddled vehicle according to the present aspect, the storage box includes the bulge portion, bulging downward, in the bottom surface thereof. Because of this, a helmet, even if of a large-sized type, can be stored in the storage box when disposed on the bulge portion, with the top surface of the helmet being oriented downward. Besides, the bulge portion is disposed above the fender front portion. In other words, the bulge portion is disposed in place by utilizing a space above the fender front portion curving forward and downward. Because of this, the storage box can be increased in storage space by enlarging the bulge portion, while interference thereof with a movable range of the rear fender can be avoided.

The storage box may include a recess, recessing upward, in the bottom surface thereof. The recess may be disposed ahead of the bulge portion. In this case, a half-face helmet can be disposed in the storage box by utilizing the recess; besides, a space can be reliably produced below the recess.

The straddled vehicle may further include an engine and an engine auxiliary device. The engine auxiliary device may be connected to the engine. The engine auxiliary device may be disposed inside the recess. In this case, the engine auxiliary device can be compactly disposed by utilizing the space below the recess.

The straddled vehicle may further include an air cleaner. The air cleaner may be disposed below the storage box. The air cleaner may be disposed below the bulge portion and may have a shape that avoids the bulge portion. The bulge portion may be disposed to avoid a movable range of the rear fender. In this case, the air cleaner has a shape that avoids the bulge portion; besides, the bulge portion is disposed to avoid the movable range of the rear fender. Accordingly, the storage box can avoid interference with a device disposed below the storage box.

The air cleaner may include a top surface shaped to curve downward so as to be not in contact with the bulge portion. In this case, the storage box can avoid interference with the top surface of the air cleaner disposed below the storage box.

The air cleaner may include a cleaner body and an extending portion. The extending portion may extend from the cleaner body in a vehicle right-and-left direction. The extending portion may be disposed below the bulge portion. The extending portion may include a top surface shaped to curve downward so as to be not in contact with the bulge portion. In this case, the storage box can be increased in storage space by enlarging the bulge portion, while interference between the bulge portion and the air cleaner can be avoided.

The cleaner body may overlap at least in part with the bulge portion at a position located uppermost in a movable range of the air cleaner in a vehicle side view. In this case, the storage box can be increased in storage space by enlarging the bulge portion, while interference between the bulge portion and the air cleaner can be avoided.

The storage box may include an inclined surface, slanting rearward and upward, in the bottom surface thereof. The bulge portion may protrude downward from the inclined surface. In this case, the storage box can be increased in storage space by enlarging the bulge portion, while interference thereof with a device disposed below the inclined surface can be avoided.

### BRIEF DESCRIPTION OF THE DRAWINGS

FIG. 1 is a side view of a straddled vehicle according to an embodiment.
FIG. 2 is a partial cross-sectional view of a structure below a seat in the straddled vehicle.
FIG. 3 is a left side view of the structure below the seat in the straddled vehicle.
FIG. 4 is a right side view of the structure below the seat in the straddled vehicle.
FIG. 5 is a bottom view of a storage box.
FIG. 6 is a rear view of the structure below the seat in the straddled vehicle.
FIG. 7 is a perspective view of the structure below the seat in the straddled vehicle.

### DETAILED DESCRIPTION OF EMBODIMENTS

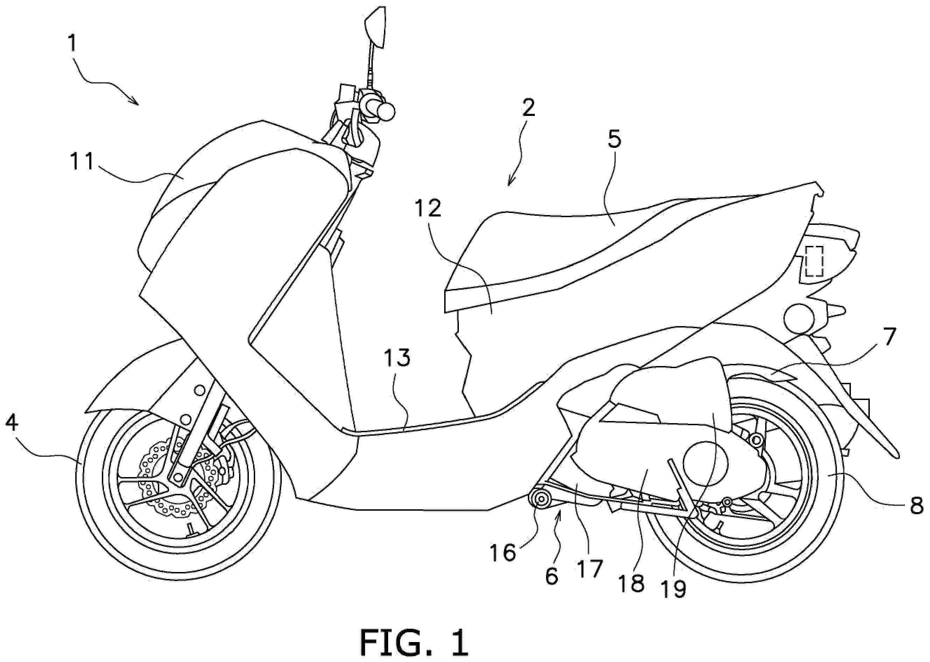

A straddled vehicle according to an embodiment will be hereinafter explained with reference to drawings. FIG. 1 is a side view of a straddled vehicle 1 according to the embodiment. The straddled vehicle 1 according to the present embodiment is a scooter. As shown in FIG. 1, the straddled vehicle 1 includes a vehicle body 2, a front wheel 4, a seat 5, a power unit 6, a rear fender 7, and a rear wheel 8. It should be noted that in the following explanation, the directional terms "front", "rear", "right", and "left" are defined as meaning front, rear, right, and left directions seen from a rider seated on the seat 5. Moreover, the teaching of the embodiments refers to a vehicle back-and-forth direction that extends in the longitudinal direction of the vehicle. The teaching of the embodiments refers to a vehicle right-and-left direction that extends in the vehicle width direction. The teaching of the embodiments refers to a vehicle up-and-down direction that extends in the vertical direction of the vehicle.

The vehicle body 2 includes a front cover 11, a rear cover 12, and a footboard 13. The rear cover 12 is disposed below the seat 5. The footboard 13 is disposed between the front cover 11 and the rear cover 12.

The power unit 6 is disposed below the seat 5. The power unit 6 has a unit swing structure. The power unit 6 is supported by the vehicle body 2, while being rotatable about a pivot shaft 16. The power unit 6 is pivoted up and down about the pivot shaft 16. The power unit 6 supports the rear wheel 8 such that the rear wheel 8 is made rotatable. The power unit 6 is pivoted about the pivot shaft 16 unitarily with the rear wheel 8 and the rear fender 7. The power unit 6 includes an engine 17, a transmission 18, and an air cleaner 19. The transmission 18 is disposed lateral to the engine 17. The air cleaner 19 is disposed above the engine 17 and the transmission 18.

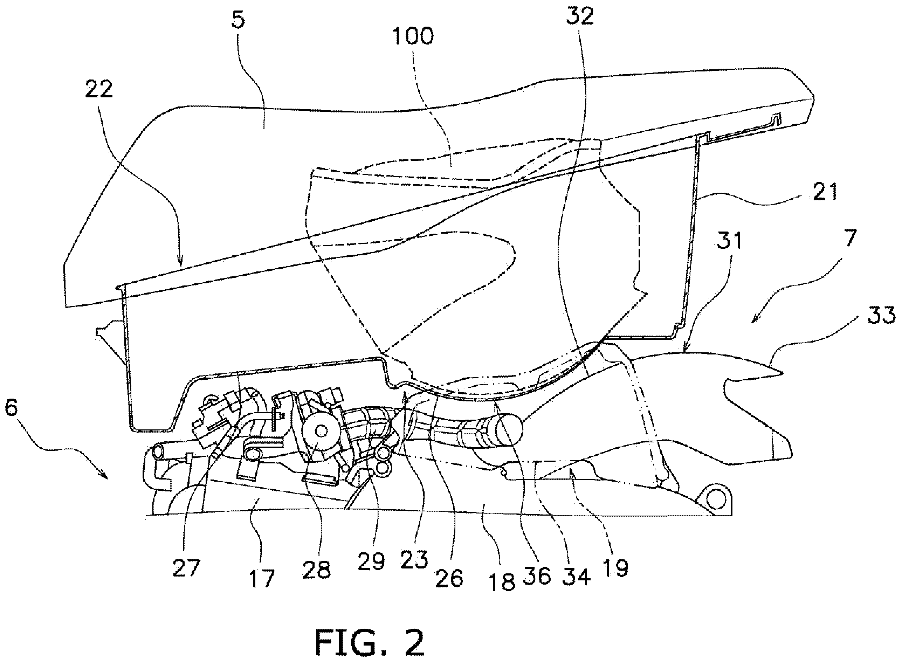

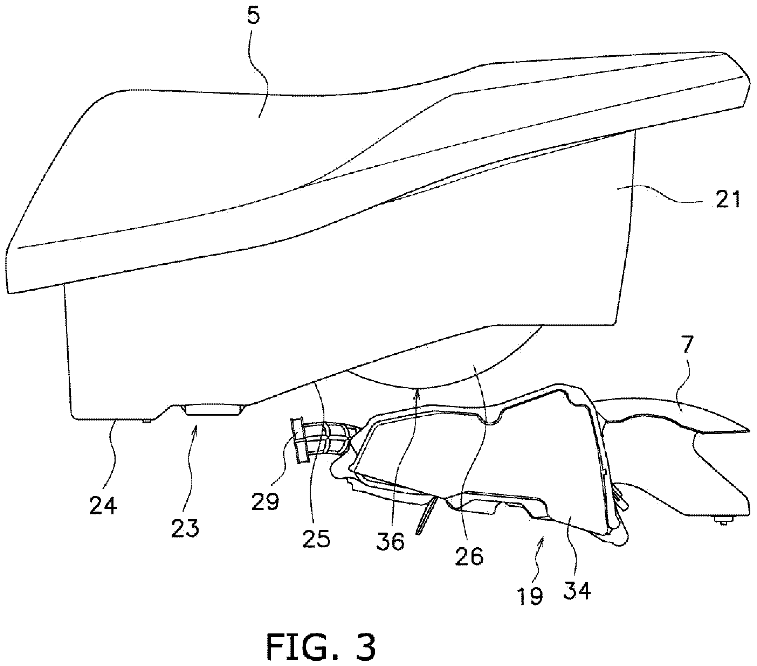

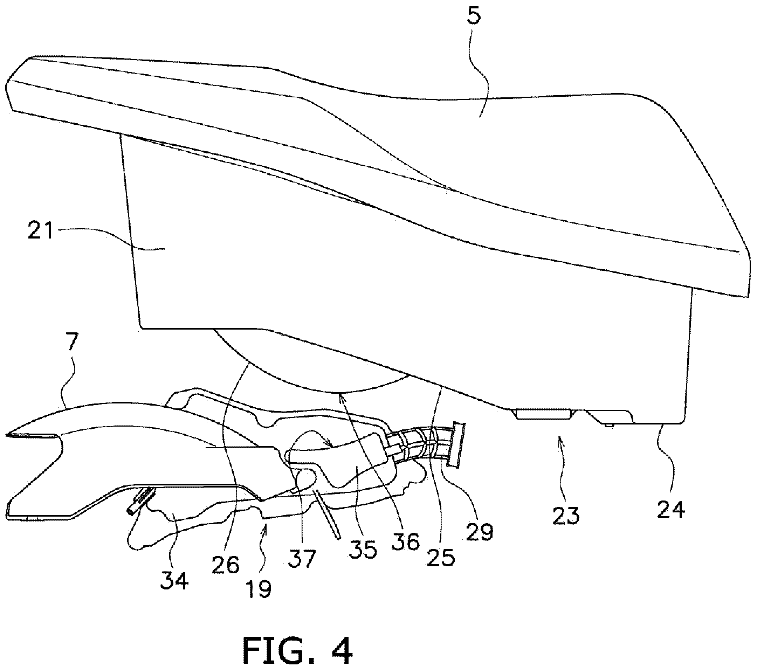

FIG. 2 is a partial cross-sectional view of a structure below the seat 5 in the straddled vehicle 1. FIG. 3 is a left side view of the structure below the seat 5 in the straddled vehicle 1. FIG. 4 is a right side view of the structure below the seat 5 in the straddled vehicle 1. It should be noted that in FIG. 2, the vehicle body 2 is depicted in part in a cross-sectional representation for easy understanding. As shown in FIGS. 2 to 4, the straddled vehicle 1 includes a storage box 21. The storage box 21 is disposed below the seat 5. The storage box 21 is covered with the rear cover 12 described above. The seat 5 is capable of opening and closing an opening 22 provided in the top face of the storage box 21. The power unit 6 is disposed below the storage box 21.

As shown in FIGS. 3 and 4, the storage box 21 includes a lowermost surface 24 and a inclined surface 25 in a bottom surface 23. The lowermost surface 24 is located lowermost in the bottom surface 23 of the storage box 21. The inclined surface 25 is disposed behind the lowermost surface 24. The inclined surface 25 extends rearward and upward from the lowermost surface 24.

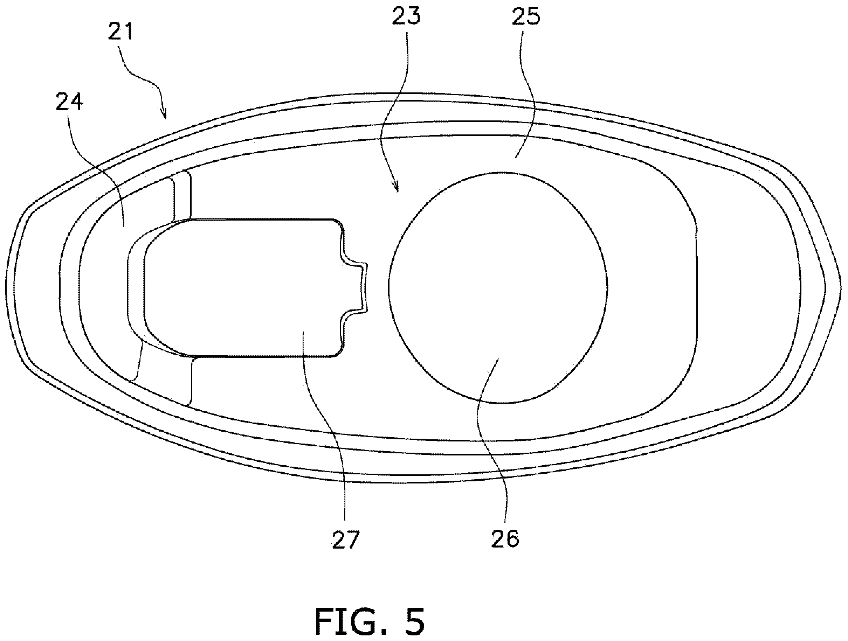

FIG. 5 is a bottom view of the storage box 21. As shown in FIGS. 2 and 5, the storage box 21 includes a bulge portion 26 and a recess 27 in the bottom surface 23. The bulge portion 26 is shaped to bulge downward. The bulge portion 26 protrudes downward from the inclined surface 25. The bulge portion 26 is made in the shape of a curved surface curving downward. The upper surface of the bulge portion 26 recesses downward on the inner surface of the storage box 21. As shown in FIG 5, the bulge portion 26 has a circular shape in a bottom view. The bulge portion 26 is shaped along the curved-surface shape of the top surface of a helmet 100.

The recess 27 is shaped to recess upward. The recess 27 is disposed ahead of the bulge portion 26. The recess 27 recesses upward from the lowermost surface 24. The upper surface of the recess 27 protrudes upward on the inner surface of the storage box 21. As shown in FIG. 5, the bulge portion 26 is larger than the recess 27 in the vehicle right-and-left direction.

As shown in FIG. 2, the power unit 6 includes an engine auxiliary device 28. The engine auxiliary device 28 is, for instance, a throttle valve. The engine auxiliary device 28 is connected to the engine 17. The engine auxiliary device 28 is connected to the air cleaner 19 through a duct 29. The engine auxiliary device 28 and the duct 29 are disposed above the engine 17. The engine auxiliary device 28 and the duct 29 are disposed between the engine 17 and the storage box 21. The engine auxiliary device 28 is disposed in part inside the recess 27.

The rear fender 7 is disposed below the storage box 21. The rear fender 7 is disposed above the rear wheel 8. The rear fender 7 is shaped to curve upward. When the power unit 6 is rotated about the pivot shaft 16, the rear fender 7 is moved up and down together with the rear wheel 8. It should be noted that FIG. 2 shows the rear wheel 8 and the rear fender 7, both of which are located uppermost in the movable ranges thereof, respectively. As shown in FIG. 2, the bulge portion 26 is disposed to be not in contact with the movable range of the rear fender 7.

When described in detail, the rear fender 7 includes a fender top portion 31, a fender front portion 32, and a fender rear portion 33. The fender top portion 31 is located uppermost in the rear fender 7. The fender top portion 31 covers a top portion of the rear wheel 8 from above. The fender front portion 32 extends forward and downward in a curved shape from the fender top portion 31. The fender rear portion 33 extends rearward and downward in a curved shape from the fender top portion 31. The bulge portion 26 is disposed above the fender front portion 32. In other words, the bulge portion 26 is disposed directly above the fender front portion 32. As shown in FIG. 4, a lower end 36 of the bulge portion 26 is located forward of the fender front portion 32.

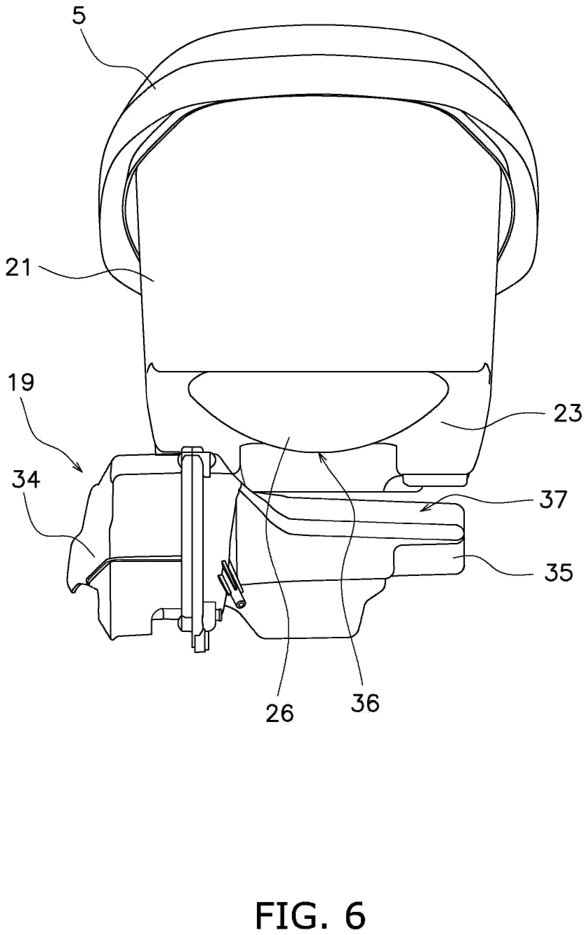

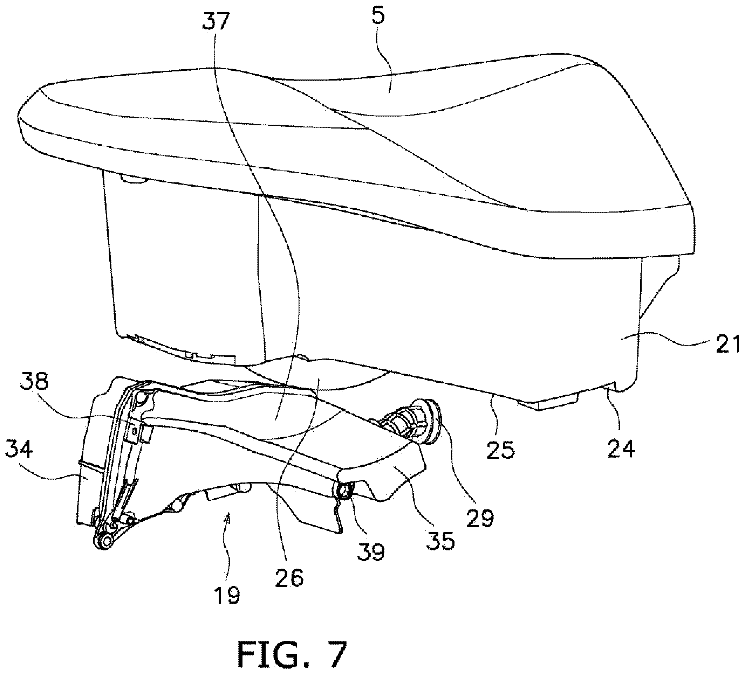

FIG. 6 is a rear view of the structure below the seat 5 in the straddled vehicle 1. FIG. 7 is a perspective view of the structure of the seat 5 in the straddled vehicle 1. It should be noted that FIGS. 6 and 7 omit illustration of the rear fender 7. As shown in FIGS. 2 to 7, the air cleaner 19 is disposed below the storage box 21. The air cleaner 19 is disposed below the bulge portion 26. The air cleaner 19 is shaped to be not in contact with the bulge portion 26.

When described in detail, the air cleaner 19 includes a cleaner body 34 and an extending portion 35. As shown in FIG. 6, the cleaner body 34 is shaped to be longer in the vehicle up-and-down direction than in the vehicle right-and-left direction in a vehicle rear view. The cleaner body 34 is disposed laterally outward of the lower end 36 of the bulge portion 26 in the vehicle rear view. The cleaner body 34 is at least in part disposed laterally outward of the bulge portion 26. The top surface of the cleaner body 34 is located above a top surface 37 of the extending portion 35 in the vehicle rear view. As shown in FIG. 2, the cleaner body 34 overlaps at least in part with the bulge portion 26 at a position located uppermost in the movable range of the air cleaner 19 in a vehicle side view.

The extending portion 35 extends from the cleaner body 34 in the vehicle right-and-left direction. The duct 29 described above extends forward from the extending portion 35. The extending portion 35 is disposed below the lower end 36 of the bulge portion 26 in the vehicle rear view. As shown in FIG. 4, the top surface 37 of the extending portion 35 is shaped to be not in contact with the bulge portion 26. In other words, the top surface 37 of the extending portion 35 is shaped to curve downward. The extending portion 35 is disposed ahead of the rear fender 7. As shown in FIG. 7, the air cleaner 19 includes a first fixation portion 38 and a second fixation portion 39. The rear fender 7 is fixed at the first and second fixation portions 38 and 39 to the air cleaner 19.

In the straddled vehicle 1 according to the present embodiment explained above, the storage box 21 includes the bulge portion 26, bulging downward, in the bottom surface 23. Because of this, the helmet 100, even if of a large-sized type, can be stored in the storage box 21, when disposed on the bulge portion 26, with the top surface of the helmet 100 being oriented downward. Besides, the bulge portion 26 is disposed above the fender front portion 32. In other words, the bulge portion 26 is disposed in place by utilizing the space above the fender front portion 32 curving forward and downward. Because of this, the storage box 21 can be increased in storage space by enlarging the bulge portion 26, while interference thereof with the movable range of the rear fender 7 can be avoided.

One embodiment has been explained above. Accordingly, the straddled vehicle 1 is a scooter. Alternatively, the straddled vehicle is another type of vehicle such as an underbone.

### REFERENCE SIGNS LIST

5: Seat, 7: Rear fender, 8: Rear wheel, 17: Engine, 19: Air cleaner, 21: Storage box, 25: Inclined surface, 26: Bulge portion, 27: Recess, 28: Engine auxiliary device, 31: Fender top portion, 32: Fender front portion, 34: Cleaner body, 35: Extending portion

## Claims

1. A straddled vehicle (1) comprising:
a seat (5);
a storage box (21) disposed below the seat (5) with regards to a vehicle up-and-down direction;
a rear wheel (8); and
a rear fender (7) disposed below the storage box (21) with regards to the vehicle up-and-down direction, the rear fender (7) being movable up and down together with the rear wheel (8) with regards to the vehicle up-and-down direction, wherein
a bottom surface (23) of the storage box (21) includes a bulge portion (26) bulging downward with regards to the vehicle up-and-down direction,
the rear fender (7) includes
a fender top portion (31) located uppermost in the rear fender (7) with regards to the vehicle up-and-down direction, and
a fender front portion (32) extending forward with regards to a vehicle back-and-forth direction and downward with regards to the vehicle up-and-down direction in a curved shape from the fender top portion (31), and
the bulge portion (26) is disposed above the fender front portion (32) with regards to the vehicle up-and-down direction.

2. The straddled vehicle (1) according to claim 1, wherein the bottom surface (23) of the storage box (21) includes a recess (27) recessing upward with regards to the vehicle up-and-down direction, and
the recess (27) is disposed ahead of the bulge portion (26) with regards to the vehicle back-and-forth direction.

3. The straddled vehicle (1) according to claim 2, further comprising:
an engine (17); and
an engine auxiliary device (28) connected to the engine (17), wherein
the engine auxiliary device (28) is disposed in the recess (27).

4. The straddled vehicle (1) according to at least one of the claims 1 to 3, further comprising:
an air cleaner (19) disposed below the storage box (21) with regards to the vehicle up-and-down direction, wherein
the air cleaner (19) is disposed below the bulge portion (26) with regards to the vehicle up-and-down direction, the air cleaner (19) having a shape that avoids the bulge portion (26), and
the bulge portion (26) is disposed to avoid a movable range of the rear fender (7).

5. The straddled vehicle (1) according to claim 4, wherein the air cleaner (19) includes a top surface (37) with regards to the vehicle up-and-down direction shaped to curve downward with regards to the vehicle up-and-down direction so as to avoid the bulge portion (26).

6. The straddled vehicle (1) according to claim 4, wherein the air cleaner (19) includes a cleaner body (34) and an extending portion (35), the extending portion (35) extending from the cleaner body (34) in a vehicle right-and-left direction,
the extending portion (35) is disposed below the bulge portion (26) with regards to the vehicle up-and-down direction, and
the extending portion (35) includes a top surface (37) with regards to the vehicle up-and-down direction shaped to curve downward with regards to the vehicle up-and-down direction so as to avoid the bulge portion (26).

7. The straddled vehicle (1) according to at least one of the claims 4 to 6, wherein the cleaner body (34) overlaps at least in part with the bulge portion (26) at a position located uppermost with regards to the vehicle up-and-down direction in a movable range of the air cleaner (19) in a vehicle side view.

8. The straddled vehicle (1) according to at least one of the claims 1 to 7, wherein the bottom surface (23) of the storage box (21) includes an inclined surface (25) slanting rearward with regards to the vehicle back-and-forth direction and upward with regards to the vehicle up-and-down direction, and
the bulge portion (26) protrudes downward from the inclined surface (25) with regards to the vehicle up-and-down direction.
